# EUROPEAN PATENT SPECIFICATION

(11) **EP 4 258 925 B1**
(45) Date of publication and mention of the grant of the patent: **18.11.2026**
(21) Application number: 21901758.9
(22) Date of filing: 08.12.2021
(51) Int. Cl.: B32B 3/26, A41D 13/11, A62D 5/00, B01D 46/02, B01D 46/54, B32B 3/06, B32B 27/08, B32B 27/32, B32B 7/05

(54) **POLYPROPYLENE AND POLYTETRAFLUOROETHYLENE COMBINATION FACE MASK**
GESICHTSMASKE AUS POLYPROPYLEN UND POLYTETRAFLUORETHYLENKOMBINATION
MASQUE FACIAL À COMBINAISON DE POLYPROPYLÈNE ET DE POLYTÉTRAFLUOROÉTHYLÈNE

(30) Priority: 08.12.2020 US 202063122759 P
(43) Date of publication of application: 18.10.2023
(73) Proprietor: AMD Médicom Inc., Pointe-Claire, Québec, H9P 2Z2 (CA)
(72) Inventor: BARBEAU, Patrice, Louiseville, Québec J5V 1J1 (CA); GIRARD, Luc, Louiseville, Québec J5V 1J1 (CA); BERGERON, Dany, Louiseville, Québec J5V 1J1 (CA); HARDY, Geneviève, Louiseville, Québec J5V 1J1 (CA)
(74) Representative: Reichert & Lindner Partnerschaft Patentanwälte
(86) International application number: PCT/CA2021/051763
(87) International publication number: WO 2022/120482

(56) References cited:
- EP-A1- 2 229 983
- EP-A1- 2 229 983
- CN-A- 111 802 731
- DE-U1- 202020 002 664
- KR-B1- 101 983 370
- KR-B1- 101 983 370
- US-A- 6 055 982
- US-A1- 2009 151 733
- US-A1- 2018 007 982

## Description

### FIELD

The present invention relates to a polypropylene (PP) and polytetrafluoroethylene (PTFE), multilayered mask. having a transparent window therein.

### BACKGROUND

SARS-CoV-2 or COVID-19 is a rapidly transmissible and highly infectious virus that was first detected in China in December 2019. Since its discovery, it has spread all over the world infecting 266 million individuals and counting. Currently, as of December 1, 2021, COVID-19 has killed 5.2 million people world-wide. To avoid a complete lockdown and to prevent increased transmission of the virus, various countries have instituted and/or reinstituted mask mandates requiring various degrees of compliance in public spaces, such as requiring masks in all indoor facilities, and in more populated areas, even when outside in public.

As of December 3, 2021, COVID-19 has mutated into two new strains, the Delta variant which dominated 2021 and the Omicron variant that was newly discovered in late November 2021. Compared to the original strain of COVID-19, the Delta variant has been shown to have increased transmissibility, and preliminary information has also predicted that the Omicron variant also has increased transmissibility.

Personal protective equipment (PPE) has long included facial coverings within the art. PPE face masks have traditionally been worn in medical facilities to avoid transmitting diseases to high-risk patients. PPE face masks are considered best practice for surgical procedures to preserve a sterile environment while decreasing the risk of infection. Widespread and public use of face masks was first used in eastern-Asian countries and has now become commonplace worldwide in view of COVID-19. In view of the new variations of COVID-19 and their increased transmissibility, PPE has become a primary method of reducing transmission.

Meltblown polypropylene is used as the middle layer of many certified medical masks and in the manufacture of respirators such as N95s. These masks contain a layer of many layers of fine woven polypropylene which is electrostatic and greatly aids in trapping air particulates. However, polypropylene masks usually are only effective for about four hours as the built-up humidity from a user's respiration will nullify the electrostatic properties of polypropylene.

US 6 055 982 A and US 2009/0151733 A1 are examples of face masks. US 6 055 982 A discloses the preamble of claim 1. Other previously designed surgical face masks include versions with a transparent section arranged over the user's mouth, for example US 2018/0007982 A1. These face masks are arranged to secure to a user via a head strap fixed to the outside surface of the face mask and additionally comprises a filtration portion that may or may not have antimicrobial materials integrated within the filtration portion. However, the efficacy of these facemasks that include transparent windows may not meet certain required standards for medical providers. Such standards include Health Canada and ASTM International, previous known as the American Society for Testing and Materials.

Thus, there is a long-felt need for a face mask that has superior blood and fluid resistance while still maintaining breathability and dryness after prolonged use that complies with the ASTM International standards and Health Canada standards. Further, there is also a long-felt need for a face masking having the above-mentioned properties and configured to have a transparent portion where a user's mouth is visible in compliance with ASTM International standards and Health Canada standards.

### SUMMARY

The invention is set out in the appended set of claims. It comprises a first polypropylene outer layer having an aperture, a second polypropylene outer layer having an aperture, a combination polytetrafluoroethylene and polypropylene inner layer having an aperture arranged between the first and second polypropylene outer layers, a transparent window arranged to overlap the apertures of the outer layers and the inner layer, the transparent window fixedly secured to an external surface of the first polypropylene outer layer, and at least one strap fixed to an external surface of one of the outer layers.

A general object of the present invention is to provide a face mask that provides filtration when the mask has accumulated humidity from extended user respiration over four hours.

A further object of the present invention is to provide a face mask that includes a transparent portion to allow visibility of a user's mouth that increases audibility and aesthetically is more appealing in settings where a user communicates frequently.

Another object of the present invention is to provide a face mask that has specific folding or pleat geometry that increases the distance of the inside surface of the face mask and a window therein from the user's mouth, to improve audibility and general comfort.

A still further object of the present invention is to provide a face mask that is compliant with ASTM F2100-19 Level 2 and 3 compliance levels.

An even further objection of the present invention is to provide a face mask that is compliant with Health Canada standards.

These and other objects, features, and advantages of the present invention will become readily apparent upon a review of the following detailed description of the invention, in view of the drawings and appended claims.

### BRIEF DESCRIPTION OF THE DRAWINGS

Various embodiments are disclosed, by way of example only, with reference to the accompanying schematic drawings in which corresponding reference symbols indicate corresponding parts, in which:
Figure 1 is a front-left perspective view of an embodiment, which is not part of the scope of the present invention, in use;
Figure 2 is a front-right perspective view of the second embodiment, which comprises all features of the present invention, in use;
Figure 3A is a perspective view of the first embodiment, which is not part of the scope of the present invention, in a non-pleated configuration;
Figure 3B is a perspective view of the first embodiment, which is not part of the scope of the present invention, in a pleated configuration;
Figure 4A is a perspective view of the second embodiment in a non-pleated configuration;
Figure 4B is a perspective view of the second embodiment in a pleated configuration also showing a focused view of the pleated arrangement;
Figure 5A is a cross-sectional view of the first embodiment, which is not part of the scope of the present invention, in a non-pleated configuration taken along lines 5A-5A shown in Figure 3A;
Figure 5B is a cross-sectional view of the second embodiment in a non-pleated configuration taken along lines 5B-5B shown in Figure 4A;
Figure 6 is an exploded view of the first embodiment, which is not part of the scope of the present invention; and,
Figure 7 is an exploded view of the second embodiment.

### DETAILED DESCRIPTION

At the outset, it should be appreciated that like drawing numbers on different drawing views identify identical, or functionally similar, structural elements. It is to be understood that the claims are not limited to the disclosed aspects.

Furthermore, it is understood that this disclosure is not limited to the particular methodology, materials and modifications described and as such may, of course, vary. It is also understood that the terminology used herein is for the purpose of describing particular aspects only and is not intended to limit the scope of the claims.

Unless defined otherwise, all technical and scientific terms used herein have the same meaning as commonly understood to one of ordinary skill in the art to which this disclosure pertains. It should be understood that any methods, devices or materials similar or equivalent to those described herein can be used in the practice or testing of the example embodiments.

It should be appreciated that the term "substantially" is synonymous with terms such as "nearly," "very nearly," "about," "approximately," "around," "bordering on," "close to," "essentially," "in the neighborhood of," "in the vicinity of," etc., and such terms may be used interchangeably as appearing in the specification and claims. It should be appreciated that the term "proximate" is synonymous with terms such as "nearby," "close," "adjacent," "neighboring," "immediate," "adjoining," etc., and such terms may be used interchangeably as appearing in the specification.

It should also be appreciated that the directional terms, e.g., "upward", "top", "downward", "bottom", "rightward", "leftward", and similar variations thereof, pertain to the corresponding figures described herein as they are illustrated. For example, "component X being positioned rightwardly relative to component Y", means that "component X" is located to the right of "component Y" with respect to the drawing to which it pertains.

It should also be further appreciated that polypropylene will be referenced as "PP" herein and after. Also, polytetrafluoroethylene will be referenced as "PTFE" herein and after.

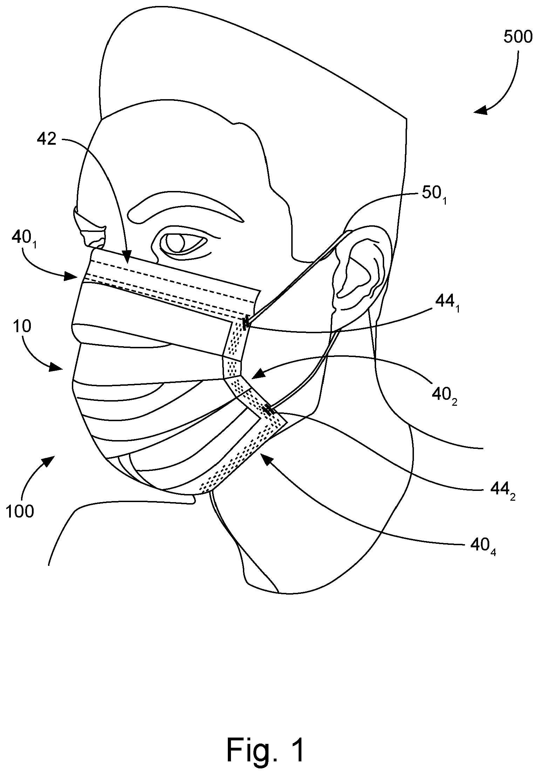

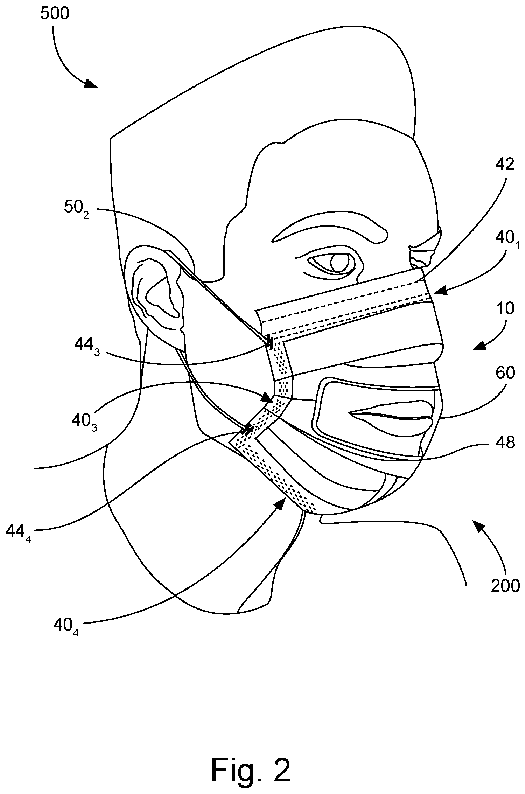

Adverting now to the figures, Figure 1 is a front left perspective view of a first embodiment, which is not part of the scope of the present invention, in use. User **500** is illustrated wearing PP and PTFE combination face mask **100** (hereinafter "mask **100**")**.** Mask **100** is secured to a user's face via ear loops **50₁** and **50₂** (**50₂** is shown in Figure 2 in view of mask **200**)**.** It should be appreciated that, although the embodiment illustrated in Figure 1 shows mask **100** secured around a user's ears via ear loops **50₁** and **50₂**, alternatively, ear loops **50₁** and **50₂** may be configured to rest around the back of the user's neck and head. It should also be appreciated that, although the exemplary illustration of the present invention depicts a pair of ear loops, it is contemplated that a third strap may also be included to create a greater seal around a user's nose and mouth. Ear loop **50₁** is secured to mask **100** via ultrasonic welds **44₁** and **44₂.** First outer layer **10** of mask **100** faces away from the face of user **500.** Mask **100** comprises three layers that are welded together by ultrasonic welding. In a preferred embodiment, mask **100** comprises four ultrasonic welds **40₁, 40₂, 40₃** (shown in Figure 2), and **40₄** which define a perimeter of the mask. The welds function to provide the best fluid resistance, bacterial filtration efficiency, particulate filtration efficiency, and breathability (when the nasal and oral passageways are covered by mask **100**). The specific standard requirements of each of these categories, along with the efficacy provided by mask **100** are described *infra.*

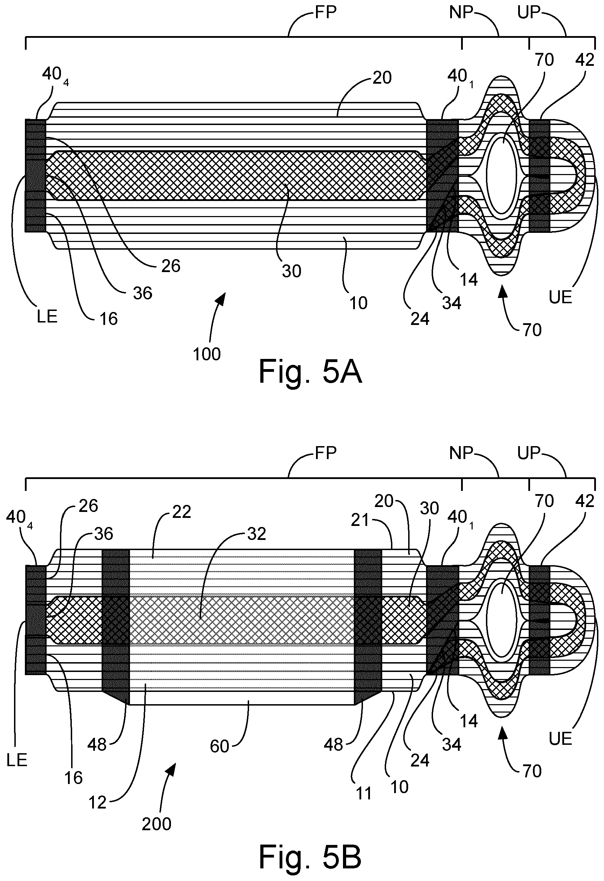

It should be appreciated that mask **200** includes all the components of mask **100** of the first embodiment, and is rotated in Figure 2 to show the right side of user **500.** Figure 2 is a front left perspective view of the second embodiment, which comprises all features of the present invention, in use. PTFE and PP combination face mask with transparent window **200** (hereinafter "mask **200**") also comprises window **60** and an aperture provided within each of the three layers of mask **200,** discussed in view of Figure 5B, *infra.* Window **60** is fixedly secured to first outer layer **10** of mask **200** via window ultrasonic weld **48** which circumscribes the outer perimeter of window **60.** The specific standard requirements of each of these categories, along with the efficacy provided by mask **200** are described *infra.* Figure 2 also shows ultrasonic welds **40₃** and **40₄** that are arranged to fix ear loop **50₂** to first outer layer **10** of mask **200.** It should be appreciated that ultrasonic welds **40₃, 40₄,** and ear loop **50₂** are also present on mask **100,** as shown in Figure 1.

Mask **200** allows the mouth of user **500** to be seen through window **60,** making verbal communication easier, *i.e.,* allowing lip-reading. Window **60** is preferably a plastic material having anti-fog attributes and, in a preferred embodiment, is made of polyethylene. This is helpful in decreasing social intimidation that can be experienced in young children's classrooms throughout COVID-19 masking procedures, where a teacher and students are able to see each others' mouths, or in other situations such as occupation therapy settings or mental disability settings. Window **60** may serve a security purpose to identify user **500** more easily behind mask **200** in a setting where user **500** may need to produce identification for entry and temporary removal of a mask may be prohibited, *e.g.,* hazardous chemical or biologic labs, or where removal is unnecessarily risky, *e.g.,* immunocompromised individuals.

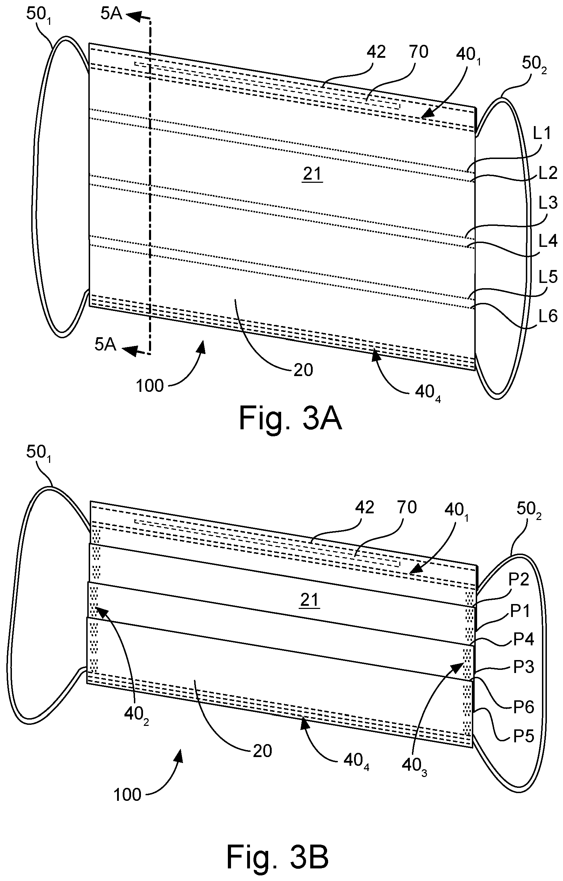

The following description should be taken in view of Figures 3A and 3B, which disclose an embodiment that is not part of the scope of the present invention. Figure 3A is a perspective rear view of mask **100** in a non-pleated configuration and Figure 3B is a perspective rear view of mask **100** in a pleated configuration. Figures 3A and 3B show the inside of mask **100,** that is, face surface **21** of second outer layer **20.** In a preferred embodiment, mask **100** is arranged to be worn with second outer layer **20** proximate to a user's face, such that various bodily structures, *e.g.,* nose, chin, cheeks, may contact face surface **21** of second outer layer **20.** Located proximate the top of mask **100** are upper ultrasonic weld **40₁** and sleeve ultrasonic weld **42,** which both fix all three layers of mask **100** together (shown in Figures 5A and 5B). Located proximate the bottom of mask **100** is lower ultrasonic weld **40₄.** upper ultrasonic weld **40₁,** lower ultrasonic weld **40₄,** and sleeve ultrasonic weld **42,** collectively secure all three layers of mask **100** together at the top and bottom of mask **100** (shown in greater detail in Figure 5A). Ear loops **50₁** and **50₂** are arranged to secure mask **100** to a user's face, as illustrated in Figure 1. Ultrasonic weld **40₁** and sleeve ultrasonic weld **42** hold nosepiece **70** in place (also shown Figure 5A). Nosepiece **70** is comprised of a deformable material, e.g., thin metal or plastic-coated metal.

To fully secure all three layers of mask **100** together, first side ultrasonic weld **40₂** and second side ultrasonic weld **40₃** are applied to the sides of mask **100.** First side ultrasonic weld **40₂** and second side ultrasonic weld **40₃** also function to pleat mask **100** by creating pleats **P1 - P6.** Pleats **P1 - P6** are all folds on fold lines **L1 - L6.** Fold lines **L1, L3,** and **L5** create pleats **P1, P3,** and **P5,** respectively, and are all upward folds, that is, mask **100** is folded upwardly (weld **40₄** is folded in a direction towards weld **42**) and into face surface **21.** Fold lines **L2, L4,** and **L6** create pleats **P2, P4,** and **P6,** respectively, and are all downward folds (weld **40₄** is folded in a direction away from weld **42**), that is, mask **100** is folded downwardly and away from face surface **21.** Pleats **P1** - **P6** create pinch points at their respective ends via first side ultrasonic weld **40₂** and second side ultrasonic weld **40₃.** When mask **100** is expanded and worn, as shown in Figure 1, mask **100** expands outwardly and away from a user's face by pleats **P1** - **P6** unfolding at substantially central locations between first side ultrasonic weld **40₂** and second side ultrasonic weld **40₃** while the ends of pleats **P1 - P6** remain folded at first side ultrasonic weld **40₂** and second side ultrasonic weld **40₃.** The unfolding increases comfort and audibility. Additionally, the distance from a user's face and face surface **21** from pleats **P1** - **P6** also functions to protect individuals from sanitary skin damage, such as a rash, or cosmetic blemishes that face surface **21** could cause to makeup from resting on a user's face.

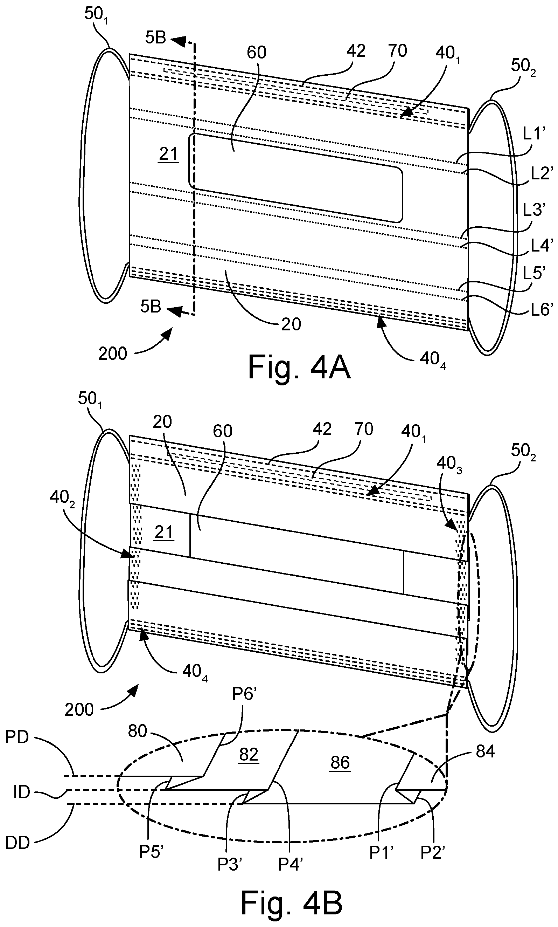

The following description should be taken in view of Figures 4A and 4B. Figure 4A is a perspective view of mask **200** in a non-pleated configuration and Figure 4B is a perspective view of mask **200** in a pleated configuration. Figures 3A and 3B show the inside of mask **200,** that is, face surface **21** of second outer layer **20.** In a preferred embodiment, mask **200** is arranged to be worn with second outer layer **20** proximate to a user's face, such that various bodily structures, e.g., nose, chin, cheeks, may contact face surface **21** of second outer layer. Located proximate to the top of mask **200** are upper ultrasonic weld **40₁** and sleeve ultrasonic weld **42,** which both fix all three layers of mask **200** together (shown in Figure 5B). Located proximate to the bottom of mask **200** is lower ultrasonic weld **40₄.** Upper ultrasonic weld **40₁,** lower ultrasonic weld **40₄,** and sleeve ultrasonic weld **42,** collectively secure all three layers of mask **100** together at the top and bottom of mask **200** (shown in greater detail in Figure 5B). Ear loops **50₁** and **50₂** are arranged to secure mask **200** to a user's face, as illustrated in Figure 2. Ultrasonic weld **40₁** and sleeve ultrasonic weld **42** hold nosepiece **70** in place (also shown Figure 5B). Nosepiece **70** is comprised of a deformable material, *e.g.,* thin metal or plastic-coated metal. Mask **200** also includes window **60** which in a preferred embodiment is arranged at a substantially horizontal central location and is arranged vertically and proximate to upper ultrasonic weld **40₁** than lower ultrasonic weld **40₄.**

To fully secure all three layers of mask **200** together, first side ultrasonic weld **40₂** and second side ultrasonic weld **40₃** are applied to the sides of mask **200.** First side ultrasonic weld **40₂** and second side ultrasonic weld **40₃** also function to pleat mask **200** by creating pleats **P1'** - **P6'.** Pleats **P1'** - **P6'** are all folds on fold lines **L1'** - **L6',** respectively. Fold lines **L1', L3',** and **L5'** create pleats **P1', P3',** and **P5',** respectively. Fold line **L1'** is an upward fold, that is, mask **200** is folded upwardly and away from face surface **21** and fold lines **L3'** and **L5'** are upward folds, that is, mask **200** is folded upwardly and into face surface **21.** Fold lines **L2', L4',** and **L6'** create pleats **P2', P4',** and **P6',** respectively. Fold line **L2'** is a downward fold, that is, mask **200** is folded downwardly and into face surface **21.** Fold lines **L4'** and **L6'** are downward folds, that is, mask **200** is folded downwardly and away from face surface **21.** Pleats **P1'** - **P6'** create pinch points at their respective ends via first side ultrasonic weld **40₂** and second side ultrasonic weld **40₃.** When mask **100** is expanded and worn, as shown in Figure 2, mask **200** expands outwardly and away from a user's face by pleats **P1' - P6'** unfolding at a substantially central location in between first side ultrasonic weld **40₂** and second side ultrasonic weld **40₃** while the ends of pleats **P1' - P6'** remain folded at first side ultrasonic weld **40₂** and second side ultrasonic weld **40₃.** The unfolding increase comfort and audibility. Additionally, pleats **P1' - P6'** create a distance between window **60** and a user's face. This distance also functions to protect individuals from sanitary skin damage, such as a rash, or cosmetic blemishes that face surface **21** and/or window **60** could cause to makeup from resting on a user's face.

Pleats **P1' - P6'** create four (4) panels within mask **200:** lower boundary panel **80,** connecting panel **82,** upper boundary panel **84,** and window panel **86.** Lower boundary panel **80** is defined by the edge of mask **200** proximate to lower ultrasonic weld **40₄** and pleat **P6',** connecting panel **82** is defined by pleats **P5'** and **P4',** upper boundary panel **84** is defined by the edge of mask **200** proximate to weld **42** and pleat **P1',** and window panel **86** is defined by pleats **P2'** and **P3'.** Window panel **60** is contained within window panel **86** and is arranged to be located on the panel that is farthest from a user's mouth or face. Pleats **P1' - P6'** create three (3) different depths of panels **80** - **86.** Lower boundary panel **80** is arranged at a proximal depth **PD.** Connecting panel **82** and upper boundary panel **84** are arranged at intermediate depth **ID.** Window panel **86** is arranged at distal depth **DD,** where distal depth **DD** is arranged at the farthest distance away from a user's mouth and face-increasing comfort for extended periods of use.

Figure 5A is a cross sectional view of mask **100** taken along line 5A-5A shown in Figure 3A, which is not part of the scope of the present invention. Specifically, Figure 5A is an exaggerated cross section view of mask **100** to properly illustrate the layering and positioning of the various components. First outer layer **10** is the layer of mask **100** that faces away from a user's face and second outer layer **20** is the layer of mask **100** that is proximate to a user's face. Inner layer **30** is sandwiched between first outer layer **10** and second outer layer **20.** Upper ultrasonic weld **40₁** and lower ultrasonic weld **40₄** fix layers **10, 20,** and **30** together, specifically, lower end **16** of first outer layer **10,** lower end **36** of inner layer **30,** and lower end **26** of second outer layer **20** are fixed by lower ultrasonic weld **40₄.** In a preferred embodiment, upper ultrasonic weld **40₁** fixes layers **10, 20,** and **30** and their respective upper ends: upper end **14** of first outer layer **10,** upper end **34** of inner layer **30,** and upper end **24** of second outer layer **20,** together, such that nosepiece sleeve **72** is formed from the excess length between layers **10, 20,** and **30** at upper ultrasonic weld **40₁** and upper ends **14, 24,** and **34.** Nosepiece sleeve **72** creates pocket **74,** that is arranged to hold nosepiece **70** therein. Pocket **74** is made tighter via sleeve ultrasonic weld **42** to hold nosepiece **70** that limits vertical movement within pocket **74.**

In reference to both Figures 5A and 5B, masks **100** and **200** are defined by three sections: filtration section **FS;** nosepiece section **NS;** and, upper section **US.** Filtration section **FS** is defined by the distance between by lower end **16** of first outer layer **10,** lower end **36** of inner layer **30,** and lower end **26** of second outer layer **20** which make up lower end **LE** and upper ultrasonic weld **40₁.** Nosepiece section **NS** is defined by the distance between upper ultrasonic weld **40₁** and sleeve ultrasonic weld **42.** Upper section **US** is defined by the distance between sleeve ultrasonic weld **42** and upper end **UE.**

Figure 5B is a cross sectional view of mask **200** take along line 5B-5B shown in Figure 4A. Specifically, Figure 5B is an exaggerated cross section view of mask **200** to properly illustrate the layering and positioning of the various components. Mask **200** includes all of the aforementioned structural components of mask **100** discussed in view of Figure 5A in addition to specific structural components of mask **200.** Focusing on the additional components that make up mask **200,** most notably is window **60.** According to the invention, window **60** is fixed to external surface **11** of first outer layer **10** of mask **200** via window ultrasonic weld **48,** as shown. Window ultrasonic weld **48** is a continuous weld that is arranged to circumscribe the external boundaries of window **60.** Mask **200** also includes aperture **12** of first outer layer **10,** aperture **22** of second outer layer **20,** and aperture **32** of inner layer **30.** Window ultrasonic weld **48** also fixes the external boundaries of apertures **12, 22,** and **32** such that there are no non-filtered areas around apertures **12, 22, 32,** and window **60.** Window **60** is a non-filtration component, that is, it does not have any porosity. Window ultrasonic weld **48** allows mask **200** to have the same efficacy as mask **100** despite the presence of apertures **12, 22,** and **32** within first outer layer **10,** second outer layer **20,** and inner layer **30,** respectively.

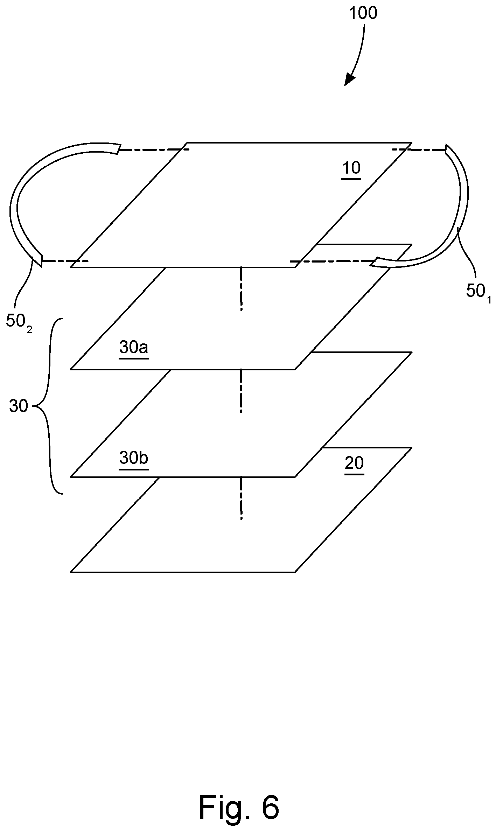

Figure 6, which is not part of the scope of the present invention, is an exploded view of mask **100.** Mask **100** comprises four layers, first outer layer **10** made of PP, second outer layer **20** made of PP, and inner layer **30** comprising a laminated combination of PP layer **30a** and PTFE layer **30b.** Ear loops **50₁** and **50₂** are fixed to the external surface of first outer layer **10** by ultrasonic welds, as discussed *supra.*

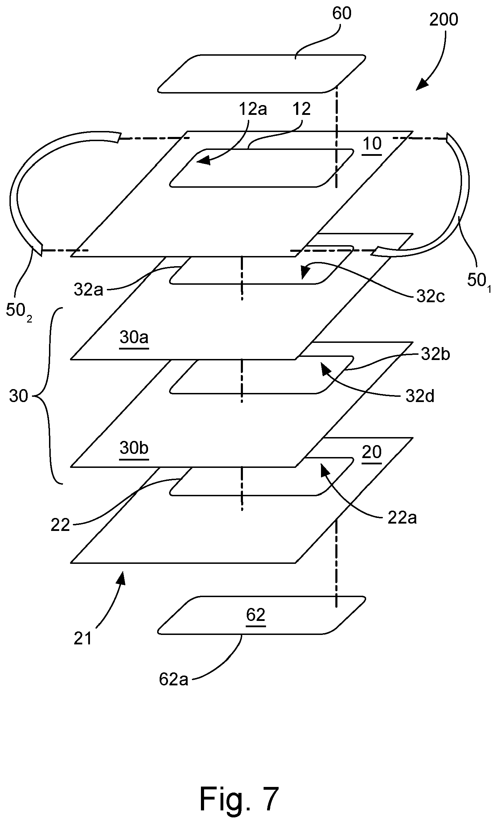

Figure 7 is an exploded view of mask **200.** Mask **200** comprises four layers, first outer layer **10** made of PP, second outer layer **20** made of PP, and inner layer **30** comprising a laminated combination of PP layer **30a** and PTFE layer **30b.** Each of the aforementioned layers comprise an aperture. First outer layer **10** includes aperture **12,** second outer layer includes aperture **22,** PP layer **30a** of inner layer **30** includes aperture **32a,** and PTFE layer **30b** includes aperture **32b.** Apertures **12, 22, 32a,** and **32b** are colinearly aligned. Ear loops **50₁** and **50₂** are fixed to the external surface of first outer layer **10** by ultrasonic welds, as discussed *supra,* by any other viable attachment method for textiles. According to the invention, window **60** is fixed to the external surface of first outer layer **10** by an ultrasonic weld, discussed *supra.* Window **60** in a preferred embodiment is made of polyethylene. Window **60** may comprise 99.79% polyethylene and 0.21% of another suitable additive that may vary in manufacturing. In a preferred embodiment, window **60** is a Poly Expert^{®} PEX-972-CLEAR-HS / Antifog polyethylene and is Food and Drug regulation 21 C.F.R. 177.1520 compliant. Window cover **62** in a preferred embodiment is arranged to be removably attached, *e.g*., by perforation, to inside rims **12a, 32c, 32d,** and **22a** of apertures **12, 32a, 32b,** and **22,** respectively. Window cover **62** is arranged to cover the surface of window **60** that faces face surface **21** of second outer layer **20.** Window cover **62** keeps window **60** free from debris and sanitary before use, or alternatively, provides a shade to window **62** if transparency is unwanted.

It should be appreciated that PP layer **30a** and PTFE layer **30b** of inner layer **30** are shown as separate layers in Figures 6 and 7 representatively, as PP layer **30a** and PTFE layer **30b** are laminated together and may only be separated by forcible removal, *i.e.*, destruction of either mask **100** or mask **200.** As such, apertures **32a** and **32b** of PFTE layers **30a and 30b** shown in Figure 7 are merely exemplary to illustrate the combination of material layers that comprise inner layer **30.**

It should be understood that polypropylene (PP) is a thermoplastic polymer used in a wide variety of applications. It is produced via chain-growth polymerization from the monomer propylene. PP fabric is a non-woven fabric and may be electrostatically charged to improve filtration of air particulates that would pass through a PP sheet. As such, PP is a vital raw material for producing meltblown fabric, which is, in turn, the raw material for producing facial masks.

It should also be understood that polytetrafluoroethylene (PTFE) is a fluorocarbon solid, as it is a high molecular weight compound consisting wholly of carbon and fluorine. PTFE is hydrophobic: neither water nor water-containing substances wet PTFE, as fluorocarbons demonstrate mitigated London dispersion forces due to the high electronegativity of fluorine. PTFE has one of the lowest coefficients of friction of any solid. Since PTFE is hydrophobic, face mask **100** or mask **200** of the present invention will not lose efficiency after extended use, whereas purely PP-comprised face masks will lose their electrostatic charge when worn for over four hours. An advantage of the PP and PTFE combination mask is the microporous structure that is created when it is stretched that is small enough to prevent bacteria and even virus transmission through inner layer **30** of masks **100** and **200.**

The ratings of the PTFE layer and PP layer of inner layer **30** are as follows:
PTFE membrane porosity: 45-90%
PP nonwoven weight: 10-40 gsm (grams per square meter)
Inner Layer **30** thickness range: 0.5-7 microns

The ultrasonic welds, described *supra,* should be understood to mean techniques well known and understood by one having ordinary skill in the art of "ultrasonic soldering". The ultrasonic welds may be a laminating process or any other suitable attachment process for textile adhesion. Alternatively, the ultrasonic welds, described *supra,* may be achieved by ultrasonic slitting, that is, cleanly cutting and sealing the components of mask **100** and **200,** thereby eliminating the disadvantages of hot wire or rotating knives, fraying, unraveling, or beading along the cut edge.

### EFFICACY STANDARDS AND RESULTS

The ASTM International, formerly known as the American Society for Testing and Materials, provides a guide assessing the appropriate face mask level for various procedures:

| **Minimum Protection** | Ideal as a simple barrier for exams and short procedures that do not produce fluid, spray or aerosols. |
|---|---|
| **Level 1** | Ideal for procedures where low amounts of fluid, spray and/or aerosols are produced. |
| **Level 2** | Ideal for procedures where low to moderate amounts of fluid, spray and/or aerosols are produced. |
| **Level 3** | Ideal for procedures where moderate to heavy amounts of fluid, spray and/or aerosols are produced. |

ASTM F2100-19: Standard Specification for Performance of Materials Used in Medical Face Masks, provides for the requirements of medical face masks, which are subdivided into three categories. The threshold requirements are based on: Bacterial filtration efficiency (BFE) percentage; Particulate filtration efficiency (PFE) percentage; Splash Resistance (mmHg) pass/fail; Pressure differential (mmH₂O/cm²) ΔP; and Flammability pass/fail, as follows:

| **ASTM F2100-11 Standards** | **ASTM Level 1 Mask** | **ASTM Level 2 Mask** | **ASTM Level 3 Mask** |
|---|---|---|---|
| **Fluid Resistance, mmHg** | 80 | 120 | 160 |
| **BFE%** | ≥95% | ≥98% | ≥98% |
| **PFE%, @ 0.1 micron** | ≥95% | ≥98% | ≥98% |
| **Delta P, mm H20/cm2** | < 4.0 | < 5.0 | < 5.0 |
| **Flame Spread** | Class 1 | Class 1 | Class 1 |

The following charts show the testing data of mask **100.** It should be appreciated that mask **100** may comprise two different levels of efficacy, ATSM F2100-19 / Level 2 Compliant or ATSM F2100-19 / Level 3 Compliant. The applicable testing data of mask **100** are shown in summation, below:

| **ASTM F2100-19 / LEVEL 2 COMPLIANT** | **METHOD** | **SPECIFICATION** | **RESULT** |
|---|---|---|---|
| **Bacterial filtration efficiency (BFE), %** | ASTM F2101 | ≥ 98 | 100 |
| **Particulate filtration efficiency (PFE), %** | ASTM F2299 | ≥ 98 | 98.33 |
| **Splash Resistance (mmHg)** | ASTM F1862 | 120 | Pass |
| **Pressure differential (mmH2O/cm2) ΔP** | EN 14683:2019 - Annex C | < 6.0 | 3.73 |
| **Flammability** | 16 CFR PART 1610 | Class 1 | Pass |

| **ASTM F2100-19 / LEVEL 3 COMPLIANT** | **METHOD** | **SPECIFICATION** | **RESULT** |
|---|---|---|---|
| **Bacterial filtration efficiency (BFE), %** | ASTM F2101 | ≥ 98 | 100 |
| **Particulate filtration efficiency (PFE), %** | ASTM F2299 | ≥ 98 | 99.47 |
| **Splash Resistance (mmHg)** | ASTM F1862 | 160 | Pass |
| **Pressure differential (mmH2O/cm2) ΔP** | EN 14683:2019 - Annex C | < 6.0 | 5.15 |
| **Flammability** | 16 CFR PART 1610 | Class 1 | Pass |

The following charts show the testing data representation mask **200.** It should be appreciated that mask **200** may comprise two different levels of efficacy, ATSM F2100-19 / Level 2 Compliant or ATSM F2100-19 / Level 3 Compliant. The applicable testing data of mask **200** are shown in summation, below:

| **ASTM F2100-19 / LEVEL 2 COMPLIANT** | **METHOD** | **SPECIFICATION** | **RESULT** |
|---|---|---|---|
| **Bacterial filtration efficiency (BFE), %** | ASTM F2101 | ≥ 98 | 100 |
| **Particulate filtration efficiency (PFE), %** | ASTM F2299 | ≥ 98 | 98.33 |
| **Splash Resistance (mmHg)** | ASTM F1862 | 120 | Pass |
| **Pressure differential (mmH2O/cm2) ΔP** | EN 14683:2019 - Annex C | < 6.0 | 3.73 |
| **Flammability** | 16 CFR PART 1610 | Class 1 | Pass |

| **ASTM F2100-19 / LEVEL 3 COMPLIANT** | **METHOD** | **SPECIFICATION** | **RESULT** |
|---|---|---|---|
| **Bacterial filtration efficiency (BFE), %** | ASTM F2101 | ≥ 98 | 100 |
| **Particulate filtration efficiency (PFE), %** | ASTM F2299 | ≥ 98 | 99.47 |
| **Splash Resistance (mmHg)** | ASTM F1862 | 160 | Pass |
| **Pressure differential (mmH2O/cm2) ΔP** | EN 14683:2019 - Annex C | < 6.0 | 5.15 |
| **Flammability** | 16 CFR PART 1610 | Class 1 | Pass |

Canada no longer follows the ASTM International standards and instead follows new guidance from Health Canada, both mask **100** and mask **200** comply with Health Canada guidelines. Mask **200** also complies with the National Institute for Occupational Safety and Health for medical grade face masks with a transparent window. Mask **200** was also tested for bacterial cleanliness and cytotoxicity per the International Organization for Standardization, ISO 10993-5 and ISO 10993-10 for medical devices and mask **200** passed both tests. ISO 10993-5 tests relate to the incubation of cultured cells in contact with a device and/or extracts of a device either directly or through diffusion. 10993-10 tests relate to the assessment of medical devices and their constituent materials with regard to their potential to induce skin sensitization.

It will be appreciated that various aspects of the disclosure above and other features and functions, or alternatives thereof, may be desirably combined into many other different systems or applications. Various presently unforeseen or unanticipated alternatives, modifications, variations, or improvements therein may be subsequently made by those skilled in the art which are also intended to be encompassed by the following claims.

### REFERENCE NUMERALS

- **10**: First outer layer of face mask **100, 200**
- **11**: External surface of firs touter layer **10**
- **12**: Aperture of first outer layer of face mask **200**
- **12a**: Internal rim of aperture **12**
- **14**: Upper end of first outer layer of face mask **100, 200**
- **16**: Lower end of first outer layer of face mask **100, 200**
- **20**: Second outer layer of face mask **100, 200**
- **21**: Face surface of second outer layer **20**
- **22**: Aperture of second outer layer of face mask **200**
- **22a**: Internal rim of aperture **22**
- **24**: Upper end of second outer layer of face mask **100, 200**
- **26**: Lower end of second outer layer of face mask **100, 200**
- **30**: Inner layer of face mask **100, 200**
- **30a**: PP layer of inner layer **30** of face mask **100, 200**
- **30b**: PTFE layer of inner layer **30** of face mask **100, 200**
- **32**: Aperture of inner layer of face mask **200**
- **32a**: Aperture of PP layer **30a** of inner layer **30** of face mask **200**
- **32b**: Aperture of PTFE layer **30b** of inner layer **30** of face mask **200**
- **32c**: Internal rim of aperture **32a**
- **32d**: Internal rim of aperture **32b**
- **34**: Upper end of inner layer of face mask **100, 200**
- **36**: Lower end of inner layer of face mask **100, 200**
- **40**: Ultrasonic weld
- **40₁**: Upper ultrasonic weld
- **40₂**: First side ultrasonic weld
- **40₃**: Second side ultrasonic weld
- **40₄**: Lower ultrasonic weld
- **42**: Sleeve ultrasonic weld
- **44₁**: Ear loop ultrasonic weld
- **44₂**: Ear loop ultrasonic weld
- **44₃**: Ear loop ultrasonic weld
- **44₄**: Ear loop ultrasonic weld
- **48**: Window ultrasonic weld
- **50₁**: Ear loop
- **50₂**: Ear loop
- **60**: Window
- **62**: Window cover
- **70**: Nosepiece
- **72**: Nosepiece sleeve
- **74**: Pocket of nosepiece sleeve **72**
- **80**: Lower boundary panel
- **82**: Connecting panel
- **84**: Upper boundary panel
- **86**: Window panel
- **100**: PTFE and PP combination face mask
- **200**: PTFE and PP combination face mask with transparent window
- **P1-P6**: Pleats of mask **100**
- **P1'-P6'**: Pleats of mask **200**
- **L1-L6**: Pleat lines of mask **100**
- **L1'-L6'**: Pleat lines of mask **200**
- **LE**: Lower end
- **UE**: Upper end
- **FS**: Filtration section
- **NS**: Nose section
- **US**: Upper section
- **PD**: Proximal depth
- **ID**: Intermediate depth
- **DD**: Distal depth

## Claims

1. A face mask (200), comprising:
a first polypropylene outer layer (10);
a second polypropylene outer layer (20);
a combination polytetrafluoroethylene and polypropylene inner layer (30, 30a, 30b) arranged between said first and second polypropylene outer layers (10, 20);
at least one strap (50₁, 50₂) fixed to an external surface of one of said outer layers (10, 20);
a first weld (40) arranged to fuse an outside perimeter of the outer layers (10, 20) and the inner layer (30, 30a, 30b), the first weld (40) is further arranged to pleat the outer layers (10, 20) and the inner layer (30, 30a, 30b);
wherein the first weld (40) includes a pair of horizontal welds (40₁, 40₄) and a pair of vertical welds (40₂, 40₃), the pair of horizontal welds (40₁, 40₄) arranged proximate to a pair of horizontal and parallelly arranged external borders of the mask (200), the pair of vertical welds (40₂, 40₃) arranged proximate to a pair of vertical and parallelly arranged external borders of the mask (200), the pair of vertical welds (40₂, 40₃) further arranged to pleat the outer layers (10, 20) and the inner layer (30, 30a, 30b); and,
a flexible nosepiece (70);
**characterized in that**
the first polypropylene outer layer (10) has an aperture (12);
the second polypropylene outer layer (20) has an aperture (22);
the inner layer (30, 30a, 30b) has an aperture (32, 32a, 32b);
a transparent window (60) is arranged to overlap the apertures (12, 22) of the outer layers (10, 20) and the aperture (32, 32a, 32b) of the inner layer (30, 30a, 30b), the transparent window (60) being fixedly secured to an external surface (11) of the first polypropylene outer layer (10);
a second weld (48) is arranged to fuse the transparent window (60) to the external surface (11) of the first polypropylene outer layer (10);
the second weld (48) is arranged to fuse the outer layers (10, 20) and the inner layer (30, 30a, 30b) about an outside perimeter of the apertures (12, 22) of the outer layers (10, 20) and the aperture (32, 32a, 32b) of the inner layer (30, 30a, 30b);
the flexible nosepiece (70) is secured within a sleeve (72), the sleeve (72) being formed by a fold of the first outer layer (10), the inner layer (30, 30a, 30b) and the second outer layer (20) to either an external surface (11) of the first outer layer (10) or an external surface (21) of the second outer layer (20) via a sleeve weld (42),
wherein the pair of vertical welds (40₂, 40₃) pleat the outer layers (10, 20) and the inner layer (30, 30a, 30b) in a manner that creates four panels (80, 82, 84, 86) having three different levels of depth (DD, ID, PD), the levels of depth include a distal depth (DD), an intermediate depth (ID), and a proximate depth (PD).

2. The face mask (200) recited in Claim 1, wherein the first weld (40), the second weld (48) and the sleeve weld (42) are provided by ultrasonic welding techniques.

3. The face mask (200) recited in any of the preceding Claims, wherein the combination of said first polypropylene outer layer (10), second polypropylene outer layer (20), and said combination polytetrafluoroethylene and polypropylene inner layer (30, 30a, 30b) have a bacterial filtration efficiency (BFE) of 100%.

4. The face mask (200) recited in any of the Claims 1 to 2, wherein the combination of said first polypropylene outer layer (10), second polypropylene outer layer (20), and said combination polytetrafluoroethylene and polypropylene inner layer (30, 30a, 30b) have a particulate filtration efficiency (PFE) of greater than 98%.

5. The face mask (200) recited in any of the preceding Claims, wherein the four panels (80, 82, 84, 86) comprise:
a lower boundary panel (80), the lower boundary panel (80) arranged at the proximate depth (PD);
an upper boundary panel (84), the upper boundary panel (84) arranged at the intermediate depth (ID);
a connecting panel (82), the connecting panel (82) arranged at the intermediate depth (ID); and,
a window panel (86) comprising the apertures (12, 22, 32, 32a, 32b) of the outer layers (10, 20) and the inner layers (30, 30a, 30b), the window panel (86) comprising the window (60), the window panel (86) arranged at the distal depth (DD),
wherein the upper boundary panel (84) is integrally connected to the window panel (86), the window panel (86) is integrally connected to the connecting panel (82), the connecting panel (82) is integrally connected to the lower boundary panel (80).

6. The face mask (200) recited in any of the preceding Claims, wherein said transparent window (60) is made of polyethylene.

7. The face mask (200) recited in any of the Claims 1 to 5, wherein said transparent window (60) comprises approximately 99.79% polyethylene.

## Patentansprüche

1. Eine Gesichtsmaske (200), umfassend:
eine erste Polypropylen-Außenschicht (10);
eine zweite Polypropylen-Außenschicht (20);
eine zwischen der ersten und der zweiten Polypropylen-Außenschicht (10, 20) angeordnete Innenschicht (30, 30a, 30b) aus einer Kombination von Polytetrafluorethylen und Polypropylen;
mindestens ein Band (50₁, 50₂), das an einer äußeren Oberfläche einer der genannten Außenschichten (10, 20) befestigt ist;
eine erste Schweißnaht (40), die so angeordnet ist, dass sie einen Außenumfang der Außenschichten (10, 20) und der Innenschicht (30, 30a, 30b) verschweißt, wobei die erste Schweißnaht (40) ferner so angeordnet ist, dass sie die Außenschichten (10, 20) und die Innenschicht (30, 30a, 30b) faltet;
wobei die erste Schweißnaht (40) ein Paar horizontaler Schweißnähte (40₁, 40₄) und ein Paar vertikaler Schweißnähte (40₂, 40₃) umfasst, wobei das Paar horizontaler Schweißnähte (40₁, 40₄) in der Nähe eines Paares horizontaler und parallel angeordneter Außenränder der Maske (200) angeordnet ist, das Paar vertikaler Schweißnähte (40₂, 40₃) in der Nähe eines Paares vertikaler und parallel angeordneter Außenränder der Maske (200) angeordnet ist, wobei das Paar vertikaler Schweißnähte (40₂, 40₃) ferner so angeordnet ist, dass es die Außenschichten (10, 20) und die Innenschicht (30, 30a, 30b) faltet; und
ein flexiblen Nasenstück (70);
**dadurch gekennzeichnet, dass**
die erste Polypropylen-Außenschicht (10) eine Öffnung (12) aufweist;
die zweite Polypropylen-Außenschicht (20) eine Öffnung (22) aufweist;
die Innenschicht (30, 30a, 30b) eine Öffnung (32, 32a, 32b) aufweist;
ein transparentes Fenster (60) so angeordnet ist, dass es die Öffnungen (12, 22) der Außenschichten (10, 20) und die Öffnung (32, 32a, 32b) der Innenschicht (30, 30a, 30b) überlappt, wobei das transparente Fenster (60) fest an einer Außenfläche (11) der ersten Polypropylen-Außenschicht (10) befestigt ist;
eine zweite Schweißnaht (48) so angeordnet ist, dass sie das transparente Fenster (60) mit der Außenfläche (11) der ersten Polypropylen-Außenschicht (10) verschweißt;
die zweite Schweißnaht (48) so angeordnet ist, dass sie die Außenschichten (10, 20) und die Innenschicht (30, 30a, 30b) entlang eines Außenumfangs der Öffnungen (12, 22) der Außenschichten (10, 20) und der Öffnung (32, 32a, 32b) der Innenschicht (30, 30a, 30b) verschweißen;
das flexible Nasenstück (70) in einer Hülse (72) befestigt ist, wobei die Hülse (72) durch eine Falte der ersten Außenschicht (10), der Innenschicht (30, 30a, 30b) und der zweiten Außenschicht (20) gebildet ist, die über eine Hülsenschweißnaht (42) entweder an einer Außenfläche (11) der ersten Außenschicht (10) oder an einer Außenfläche (21) der zweiten Außenschicht (20) befestigt ist,
wobei das Paar vertikaler Schweißnähte (40₂, 40₃) die Außenschichten (10, 20) und die Innenschicht (30, 30a, 30b) so faltet, dass vier Bahnen (80, 82, 84, 86) mit drei unterschiedlichen Tiefenstufen (DD, ID, PD) entstehen, wobei die Tiefenstufen eine distale Tiefe (DD), eine intermediäre Tiefe (ID) und eine proximale Tiefe (PD) umfassen.

2. Die Gesichtsmaske (200) gemäß Anspruch 1, wobei die erste Schweißnaht (40), die zweite Schweißnaht (48) und die Hülsenschweißnaht (42) durch Ultraschallschweißverfahren hergestellt sind.

3. Die Gesichtsmaske (200) gemäß einem der vorstehenden Ansprüche, wobei die Kombination aus der ersten Polypropylen-Außenschicht (10), der zweiten Polypropylen-Außenschicht (20) und der aus Polytetrafluorethylen und Polypropylen bestehenden Innenschicht (30, 30a, 30b) eine bakterielle Filtereffizienz (BFE) von 100 % aufweist.

4. Die Gesichtsmaske (200) gemäß einem der Ansprüche 1 bis 2, wobei die Kombination aus der ersten Polypropylen-Außenschicht (10), der zweiten Polypropylen-Außenschicht (20) und der aus Polytetrafluorethylen und Polypropylen bestehenden Innenschicht (30, 30a, 30b) eine Partikelfiltereffizienz (PFE) von mehr als 98 % aufweist.

5. Die Gesichtsmaske (200) gemäß einem der vorstehenden Ansprüche, wobei die vier Bahnen (80, 82, 84, 86) umfassen:
eine untere Begrenzungsbahn (80), wobei die untere Begrenzungsbahn (80) in der proximalen Tiefe (PD) angeordnet ist;
eine obere Begrenzungsbahn (84), wobei die obere Begrenzungsbahn (84) in der intermediären Tiefe (ID) angeordnet ist;
eine Verbindungsbahn (82), wobei die Verbindungsbahn (82) in der intermediären Tiefe (ID) angeordnet ist; und
eine Fensterbahn (86), die die Öffnungen (12, 22, 32, 32a, 32b) der Außenschichten (10, 20) und der Innenschichten (30, 30a, 30b) umfasst, wobei die Fensterbahn (86) das Fenster (60) umfasst und die Fensterbahn (86) in der distalen Tiefe (DD) angeordnet ist,
wobei die obere Begrenzungsbahn (84) mit der Fensterbahn (86) integral verbunden ist, die Fensterbahn (86) mit der Verbindungsbahn (82) integral verbunden ist und die Verbindungsbahn (82) mit der unteren Begrenzungsbahn (80) integral verbunden ist.

6. Die Gesichtsmaske (200) gemäß einem der vorstehenden Ansprüche, wobei das transparente Fenster (60) aus Polyethylen besteht.

7. Die Gesichtsmaske (200) gemäß einem der Ansprüche 1 bis 5, wobei das transparente Fenster (60) zu etwa 99,79 % aus Polyethylen besteht.

## Revendications

1. Un masque facial (200), comprenant :
une première couche extérieure en polypropylène (10) ;
une deuxième couche extérieure en polypropylène (20) ;
une couche intérieure (30, 30a, 30b) constituée d'une combinaison de polytétrafluoroéthylène et de polypropylène, disposée entre lesdites première et deuxième couches extérieures en polypropylène (10, 20) ;
au moins une sangle (50₁, 50₂) fixée à une surface externe d'une desdites couches extérieures (10, 20) ;
une première soudure (40) agencée pour souder un périmètre extérieur des couches extérieures (10, 20) et de la couche intérieure (30, 30a, 30b), la première soudure (40) étant en outre agencée pour plisser les couches extérieures (10, 20) et la couche intérieure (30, 30a, 30b) ;
dans lequel la première soudure (40) comprend une paire de soudures horizontales (40₁, 40₄) et une paire de soudures verticales (40₂, 40₃), la paire de soudures horizontales (40₁, 40₄) étant disposées à proximité d'une paire de bords externes horizontaux et parallèles du masque (200), la paire de soudures verticales (40₂, 40₃) étant disposée à proximité d'une paire de bords externes verticaux et parallèles du masque (200), la paire de soudures verticales (40₂, 40₃) étant en outre agencées pour plisser les couches extérieures (10, 20) et la couche intérieure (30, 30a, 30b) ; et,
un embout nasal souple (70) ;
**caractérisé en ce que**
la première couche extérieure en polypropylène (10) comporte une ouverture (12) ;
la deuxième couche extérieure en polypropylène (20) comporte une ouverture (22) ;
la couche intérieure (30, 30a, 30b) comporte une ouverture (32, 32a, 32b) ;
une fenêtre transparente (60) est agencée de manière à recouvrir les ouvertures (12, 22) des couches extérieures (10, 20) et l'ouverture (32, 32a, 32b) de la couche intérieure (30, 30a, 30b), la fenêtre transparente (60) étant fixée de manière rigide à une surface externe (11) de la première couche extérieure en polypropylène (10) ;
une deuxième soudure (48) est agencée pour souder la fenêtre transparente (60) à la surface externe (11) de la première couche extérieure en polypropylène (10) ;
la deuxième soudure (48) est agencée pour fusionner les couches extérieures (10, 20) et la couche intérieure (30, 30a, 30b) autour d'un périmètre extérieur des ouvertures (12, 22) des couches extérieures (10, 20) et de l'ouverture (32, 32a, 32b) de la couche intérieure (30, 30a, 30b);
l'embout flexible (70) est fixé à l'intérieur d'un manchon (72), le manchon (72) étant formé par un pli de la première couche extérieure (10), de la couche intérieure (30, 30a, 30b) et la deuxième couche extérieure (20) de manière, soit à une surface externe (11) de la première couche extérieure (10), soit à une surface externe (21) de la deuxième couche extérieure (20), par l'intermédiaire d'une soudure de manchon (42),
dans lequel la paire de soudures verticales (40₂, 40₃) plisse les couches extérieures (10, 20) et la couche intérieure (30, 30a, 30b) de manière à créer quatre panneaux (80, 82, 84, 86) présentant trois niveaux de profondeur différents (DD, ID, PD), les niveaux de profondeur comprenant une profondeur distale (DD), une profondeur intermédiaire (ID) et une profondeur proximale (PD).

2. Le masque facial (200) selon la revendication 1, dans lequel la première soudure (40), la deuxième soudure (48) et la soudure de manchon (42) sont réalisées par des techniques de soudage par ultrasons.

3. Le masque facial (200) selon l'une quelconque des revendications précédentes, dans lequel la combinaison de ladite première couche extérieure en polypropylène (10), de ladite deuxième couche extérieure en polypropylène (20) et de ladite couche intérieure combinée en polytétrafluoroéthylène et polypropylène (30, 30a, 30b) présente une efficacité de filtration bactérienne (BFE) de 100 %.

4. Le masque facial (200) selon l'une quelconque des revendications 1 à 2, dans lequel la combinaison de ladite première couche extérieure en polypropylène (10), de ladite deuxième couche extérieure en polypropylène (20) et de ladite couche intérieure combinée en polytétrafluoroéthylène et polypropylène (30, 30a, 30b) présente une efficacité de filtration des particules (PFE) supérieure à 98 %.

5. Le masque facial (200) selon l'une quelconque des revendications précédentes, dans lequel les quatre panneaux (80, 82, 84, 86) comprennent :
un panneau de délimitation inférieur (80), le panneau de délimitation inférieur (80) étant disposé à la profondeur proximale (PD) ;
un panneau de délimitation supérieur (84), le panneau de délimitation supérieur (84) étant disposé à la profondeur intermédiaire (ID) ;
un panneau de liaison (82), le panneau de liaison (82) étant disposé à la profondeur intermédiaire (ID) ; et,
un panneau de fenêtre (86) comprenant les ouvertures (12, 22, 32, 32a, 32b) des couches externes (10, 20) et des couches intérieures (30, 30a, 30b), le panneau de fenêtre (86) comprenant la fenêtre (60), le panneau de fenêtre (86) étant disposé à la profondeur distale (DD),
dans lequel le panneau de délimitation supérieur (84) est intégralement connecté au panneau de fenêtre (86), le panneau de fenêtre (86) est intégralement connecté au panneau de liaison (82), et le panneau de liaison (82) est intégralement connecté au panneau de délimitation inférieur (80).

6. Le masque facial (200) selon l'une quelconque des revendications précédentes, dans lequel ladite fenêtre transparente (60) est réalisée en polyéthylène.

7. Le masque facial (200) selon l'une quelconque des revendications 1 à 5, dans lequel ladite fenêtre transparente (60) comprend environ 99,79 % de polyéthylène.
